# EUROPEAN PATENT SPECIFICATION

(11) **EP 0 839 833 B1**
(45) Date of publication and mention of the grant of the patent: **17.12.2003**
(21) Application number: 97500184.3
(22) Date of filing: 30.10.1997
(51) Int. Cl.: C08F 4/60, C08F 10/00, C07F 17/00

(54) **Catalyst systems for the polymerization and copolymerization of alpha-olefins**
Katalysatorsysteme für die Polymerisation und die Copolymerisation von Alpha-Olefinen
Systèmes catalytiques pour la polymérisation et la copolymérisation d'alpha-oléfines

(30) Priority: 30.10.1996 ES 9602302
(43) Date of publication of application: 06.05.1998
(73) Proprietor: REPSOL QUIMICA S.A., E-28046 Madrid (ES)
(72) Inventor: Sancho Royo, Jose, 28003 Madrid (ES); Munoz-Escalona Lafuente, Antonio, 28223 Madrid (ES); Pena Garcia, Begona, 28027 Madrid (ES); Martin Marcos, Carlos, 28850 Torrejon De Ardoz (Madrid) (ES)
(74) Representative: Del Santo Abril, Natividad

(56) References cited:
- EP-A- 0 416 815
- WO-A-96/13529
- WO-A-98/16311
- US-A- 4 172 945
- US-A- 5 486 632
- FOSTER, PATRICK ET AL: "New ethylene bridged monofluorenyl-amido group 4 complexes" J. ORGANOMET. CHEM. (1997), 545-546, 35-38 CODEN: JORCAI;ISSN: 0022-328X, XP004103312
- RIEGER BERNARD: 'Preparation and some properties of chiral ansa-mono(eta5-fluorenyl)zirconium(IV) complexes' JOURNAL OF ORGANOMETALLIC CHEMISTRY vol. 420, LAUSANNE, pages C17 - C20

## Description

The present invention relates to a new group of organometallic catalysts, and their use for the polymerisation and copolymerisation of ethylene and alpha-olefins in industrial production plants.

There is a great variety of processes and catalysts useful for the homo- and copolymerization of olefins. Catalytic systems such as Ziegler-Natta are typically able to produce polyolefins with high molecular weight and broad distribution of molecular weight. However, for many industrial applications it is of the greatest importance to obtain polyolefins characterized by high molecular weight and narrow molecular weight distribution. Besides, with these Ziegler-Natta type of catalysts, to obtain copolymers with fit contents of comonomer it is necessary to use high comonomer/monomer molar ratios in the feed and as a consequence the industrial process becomes enormously more expensive.

In the last years there has been the development of organometallic catalytic metallocene systems, that, combined with non-coordinative anions, alkylaluminoxanes or boron perfluorinated compounds (US 4542199 and EP 426637) allow to obtain polyolefins with narrow distributions of molecular weight and high molar comonomer contents. However, the molecular weights are not as high as it would be useful to give the polymer the desired properties. Besides, these molecular weights suddenly lower when the comonomer content is increased, or when the polymerization temperature rises.

In EP 416815 and EP 420436 there is the description of a new type of organometallic catalysts in which a transition metal is coordinated to a cyclopentadienyl ring and a heteroatom. These organometallic compounds, when they are activated with alkylaluminoxanes, are able to produce ethylene polymers with high molecular weight and narrow distribution of molecular weight. They moreover own a great effectiveness in comonomer incorporation. However, when the comonomer content of the polymeric chain is increasing, the molecular weight sensibly decreases.

Therefore it is an object of the present invention to provide new compounds useful in the (co)polymerization of alpha-olefins, in particular in the (co)polymerization of ethylene, which can produce polymers with high molecular weight. Besides, these catalysts are especially efficient in the comonomer incorporation, and produce copolymers with totally random distribution of the comonomer.

The organo metallic complexes (catalysts) disclosed in the present invention are chosen from the group consisting of:
(2-(cyclopentadienyl)1-oxo-ethanediyl) titanium dichloride
(2-(cyclopentadienyl)1-oxo-cyclohexanediyl) titanium dichloride
(2-(cyclopentadienyl)1-oxo-ethanediyl) zirconium dichloride
(2-(cyclopentadienyl)1-oxo-cyclohexanediyl) zirconium dichloride
(2-(cyclopentadienyl)1-tio-ethanediyl) titanium dichloride
(2-(cyclopentadienyl)1-tio-cyclohexanediyl) titanium dichloride
(2-(cyclopentadienyl)1-tio-ethanediyl) zirconium dichloride
(2-(cyclopentadienyl)1-tio-cyclohexanediyl) zirconium dichloride.

The catalysts component according to the present invention having general formula (I), is suitably prepared through reaction of a compound of general formula M'-A-E-E-D-M', wherein M' preferably is Li, Na or K, A is cyclopentadienyl, E-E is ethanediyl or cyclohexanediyl and D is an oxygen or sulfur atom with a metal M compound, preferably of formula MX₄ or with an adduct of formula MX₄2L, or MX₃3L, where M is Ti or Zr, L preferably is a linear or cyclic ether as for example: ethylic ether, tetrahydrofurane, dimethoxyethane, etc, and X is chloride, according to the following scheme.

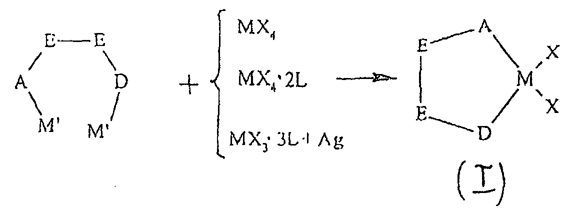

The compound of general formula M'-A-E-E-D-M' is suitably prepared through reaction of HA-E-E-DH with two equivalents of an alkyl or aryl alkali metal salt, or with an alkali metal hydride or an alkali metal according the following scheme:

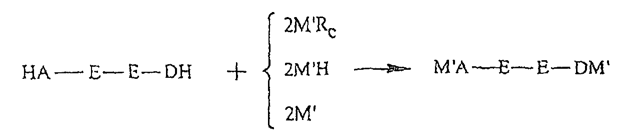

Wherein R_{c} is C₁-C₂₀ alkyl or C₆-C₂₀ aryl.

Alternatively, alkyl magnesium salts, which are obtained in the same way, is used, but using an alkyl magnesium halide instead of alkyl lithium.

When D contains oxygen the compoud HA-E-E-DH can be suitably prepared through the reaction of the alkali metal salt of the cyclic organic compound HA with a compound of general formula II:

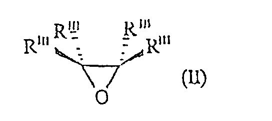

Wherein R¹¹¹ are all hydrogen, or two R¹¹¹ groups thereof belonging to a different form a cyclohexane structure.

The method comprises the following steps:
a) contacting the compound (II) with the alkali metal salt of the cyclic organic compound HA, according to the following scheme: 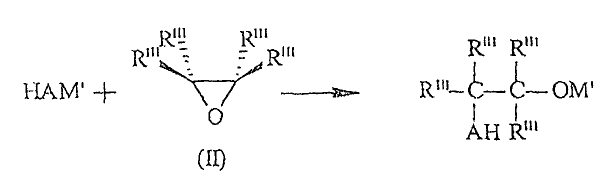
b) treating the reaction product of step a) with water

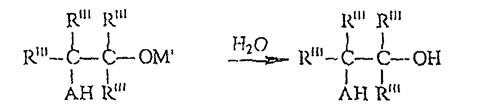

During the process for obtaining the intermediate compound of formula HA-E-E-DH and their alkali metal or magnesium halide salts, as well as the organometallic complexes obtained therefrom with the transition metal salts, the reaction temperature is kept between -100° C and 95° C, preferably between -80° C and 80°C, operating preferably under nitrogen inert atmosphere.

As non polar solvents pentane, hexane and toluene can be used; as polar aprotic solvents ethers such as diethyl ether, tetrahydrofurane or dimethoxyethane is used.

During the whole process, both the chemical species and the solvents need to be protected from oxygen and humidity. The organometallic catalysts, when stored under inert atmosphere, are active in polymerization for long periods of time.

The organometallic catalyst according to the invention, can be used in the polymerization and copolymerization of alpha-olefins through the addition of cocatalysts. These cocatalysts are compounds which can form non-coordinative anions, such as alkylaluminoxanes or boron perfluorinated compounds. Representative, but non-limiting, examples are methylaluminoxane, ethylaluminoxane, N,N-dimethylaniliniumtetrakys(pentafluorophenyl)borate, and trispentafluorophenylborane. In case boron derivatives are used, it is preferable to add to the polymerization medium little quantities of aluminium alkyls (TIBA, TEA, TMA, etc.).

The catalytic systems thus prepared are fit for the polymerization of alpha-olefins with 2 to 20 carbon atoms, in particular for the polymerization of ethylene, and for the copolymerization of ethylene with at least one alpha-olefin with 3 to 20 carbon atoms, such as propylene, 1-butene, 4-methyl-pentene, 1-hexene, etc., with dienes, with cycloalkenes and with styrene. The polymerization can be realized through a process in solution, in suspension, in gas phase or in bulk at high pressure and temperature. When using a suspension process, hydrocarbon solvents, such as branched or linear aliphatic hydrocarbons (hexane, heptane, isobutane, etc.), cyclic hydrocarbons (benzene, toluene, xylene, etc.) or a mixture thereof are used as a reaction medium. The polymerization can be realized between 1 and 4000 atmospheres and temperatures between -60 and 300°C, preferably between 40 and 220°C, and the polymerization time can vary between 20 seconds and 6 hours, according to the process.

The used concentration of the organometallic catalyst, is from 10⁻⁷ to 10⁻³ M, preferably form 10⁻⁶ to 10⁻⁴ M. The organoaluminum compound (for example an aluminoxane) is used in a concentration from 10⁻⁴ to 10⁻¹M, preferably from 10⁻³ to 10⁻² M. However, bigger concentrations of both components are possible as well. When an aluminoxane is used as cocatalyst, the used Al/M molar ratio ranges from 100 to 10000, preferably between 500 and 1500. When a boron compound is used, the molar ratio varies in the range 0.5-10, preferably 0.9-5.

The molecular weight of the obtained polymers can be controlled by varying the concentration of catalyst, cocatalyst and monomer in the polymerization medium, by varying the polymerization temperature as well as by the addition of regulators of the molecular weight such as H₂. When in the preparation of the catalyst only one type of cocatalyst is used, polymers with narrow distributions of the molecular weight are obtained. However, when several types of catalysts and/or cocatalysts are used, the obtained polymers have broad distribution of molecular weight, including also multimodal distributions.

The copolymerization reaction can be realized by using the same process as the one used in the homopolymerization process, but moreover by feeding the reaction medium with the suitable comonomer or comonomers. The preferred comonomer/monomer molar ratio is comprised between 0.1/1 and 5/1. In this way, copolymers with controlled content and random distribution of comonomer are obtained.

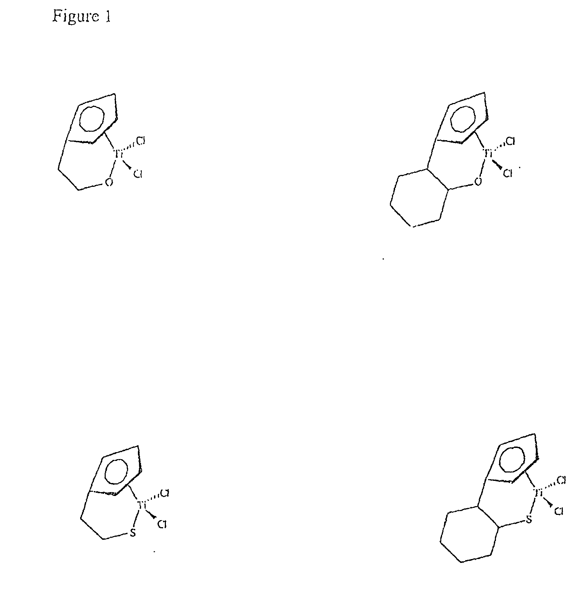

Figure 1 shows some examples of compounds according to the invention.

The following examples are described in order to better understand the invention. The materials, the chemical compounds and the conditions used in these examples are illustrative and do not limit the scope of the invention.

The average molecular weights in number, weight and distribution were determined through gel permeation chromatography GPC or SEC. The intrinsic viscosities [η] were obtained at 145°C through viscosimetric techniques, using as a solvent trichlorobenzene with 0.05% of antioxidant in order to prevent polymer degradation.

### EXAMPLE 1

### a) Preparation of 2-Cyclopentadienyl ethanol

110 g (2.5 mol) of ethylene oxide was added to a solution of 176 g (2 mol) of sodium cyclopentadienide in tetrahydrofurane, the reaction was maintained under stirring for 12 hours, then, the resulting suspension was neutralized with an ammonium chloride solution. The organic phase was extracted with hexane and concentrated to dryness, leaving an oil which was distilled, obtaining the compound at a temperature of 40-45°C under reduced pressure of 2.7 x 10⁻⁴ bar (0.2 mmHg) (22 g, 0.2 mmoles, yield: 10%). ¹H-NMR (CDCl₃): 6.70-6.00(m,3H), 3.80(m,3H), 2.85(m,2H), 2.60(m,2H).

### b) Preparation of the dilithium salt of 2-cyclopentadienylethanol

33 ml of a solution 2.5 M of butyllithium (82 mmol) in hexane was added to a solution of 4.5 g (41 mmol) of 2-cyclopentadienyl ethanol in ether at -78°C. The formation of a white solid was immediately observed, the reaction was left under stirring for 6 hours. Then, it was concentrated to dryness, obtaining a white oily solid, which was washed with hexane twice, in order to obtain a powdery white solid (4.8 g, 40 mmol, yield: 97%).

### c) Preparation of (2-cyclopentadienyl-1-oxo-ethanediyl) titanium dichloride

A suspension of 4.8 g (40 mmol) ofthe dilithium salt of 2-cyclopentadienylethanol was added to 14.8 g (40 mmol) of titanium trichloride adduct with tetrahydrofurane using tetrahydrofurane as a solvent. It was observed that the suspension darkened and acquired a reddish color. It was maintained under stirring for 2 hours and then 5.7 g (40 mmol) of silver chloride was added. It was left under stirring for 12 hours, then it was brought to dryness and toluene was added, the resulting suspension was filtered and the solution was concentrated to dryness in order to obtain 1.25 g (5.5 mmol) of (2- cyclopentadienyl-1-oxo-ethanediyl) titanium dichloride. ¹H-NMR (CDCl₃): 6.06 (m,2H), 5.77(m,2H), 4.66(t,2H), 2.14 (t,2H). ¹³C-NMR (CDCl₃): 147.4, 121.1, 118.0, 96.7. MS: M⁺=225.9 (23%).

### EXAMPLE 2

To a glass reactor of 1 liter, previously dried and degassed, 600 ml of n-heptane was added. The temperature was raised to 70°C and the solvent was stirred at 1200 rpm. When the thermic equilibrium was achieved, the medium was saturated with ethylene at a pressure of 4 bar. 17 ml of a MAO solution in toluene (1.5 M in total aluminium) was added at 2 bar of ethylene. The pressure was raised to 4 bar and 2 minutes later 0.05 mmol of the organometallic compound described in example 1 was added. The system was fed with ethylene for 15 minutes and then the polymerization was stopped by closing the ethylene flux and adding 20 ml of acidified methanol. 1 g of polyethylene with an intrinsic viscosity of 3.5 dl/g was obtained.

### EXAMPLE 3

Ethylene and 1-hexene were copolymerised. For that, the same method as in example 2 was used, but once the solvent had been added and before the reactor was pressurised, 4 ml of dry and just distilled 1-hexene was injected. A MAO solution of 17 ml (1.5 M in total aluminium) in toluene and 0.05 mmol of the catalyst described in example 1, dissolved in toluene, was used. After 15 minutes of polymerization 1.1 g of polyethylene with an intrinsic viscosity of 3.45 dl/g was obtained. The molar content in 1-hexene determined by ¹³C-NMR was 0.45% distributed at random.

## Claims

1. Organometallic catalyst component being chosen from the group, consisting of
(2-(cyclopentadienyl)1-oxo-ethanediyl) titanium dichloride
(2-(cyclopentadienyl)1-oxo-cyclohexanediyl) titanium dichloride
(2-(cyclopentadienyl)1-oxo-ethanediyl) zirconium dichloride
(2-(cyclopentadienyl)1-oxo-cyclohexanediyl) zirconium dichloride
(2-(cyclopentadienyl)1-tio-ethanediyl) titanium dichloride
(2-(cyclopentadienyl)1-tio-cyclohexanediyl) titanium dichloride
(2-(cyclopentadienyl)1-tio-ethanediyl) zirconium dichloride
(2-(cyclopentadienyl)1-tio-cyclohexanediyl) zirconium dichloride.

2. Organometallic catalyst component, being
(2-(cyclopentadienyl)1-oxo-ethanediyl) titanium dichloride.

3. Catalyst system comprising an organometallic catalyst component according to claim 1 or 2 and a cocatalyst selected from the group consisting of alkylaluminoxane and boron compounds.

4. Catalyst system according to claim 3, wherein the cocatalyst is selected from the group comprising: methylaluminoxane, ethylaluminoxane, N,N-dimethylaniliniumtetrakis-(pentafluorophenyl)borate, and trispentafluorophenylborane.

5. Method for the (co)polymerisation of α-olefins **characterized by** the use of a catalyst system according to claim 2 or 3.

6. Method for the (co)polymerisation of α-olefins according to claim 5, wherein the polymerization temperature varies between -60°C and 300°C, the pressure varies between 1 and 4000 atmospheres, the transition metal concentration varies between 10⁻⁷ and 10⁻³ M, the cocatalyst is an aluminoxane and the aluminium/transition metal molar ratio varies between 100 and 10000.

7. Method for the (co)polymerisation of α-olefins according to claim 5, wherein the polymerization temperature varies between -60°C and 300°C, the pressure varies between 1 and 4000 atmospheres, the transition metal molar concentration varies between 10⁻⁷ and 10⁻³, the cocatalyst is boron compound and the cocatalyst/transition metal molar ratio varies between 0.5 and 10.

8. Method for the (co)polymerisation of α-olefins according to claim 6, **characterized in that** the polymerization temperature varies between 40°C and 220°C, the pressure varies between 1 and 4000 atmospheres the transition metal concentration varies between 10⁻⁶ and 10⁻⁴ M, the cocatalyst is an aluminoxane and the aluminium/transition metal molar ratio varies between 500 and 1500.

9. Method for the (co)polymerisation of α-olefins according to claim 7, wherein the polymerization temperature varies between 40°C and 220°C, the pressure varies between 1 and 4000 atmospheres, the transition metal molar concentration varies between 10⁻⁶ and 10⁻⁴, the cocatalyst is a boron compound and the cocatalyst/transition metal molar ratio varies between 0.9 and 5.

10. Method for the (co)polymerisation of α-olefins according to claims 5-9, wherein the monomer is ethylene.

## Patentansprüche

1. Katalytische metallorganische Komponente, ausgewählt aus der Gruppe, die besteht aus:
(2-(Cyclopentadienyl)1-oxo-Etanodiyl)titan-dichlorid
(2-(Cyclopentadienyl)1-oxo-Cyclohexanodiyl)titandichlorid
(2-(Cyclopentadienyl)1-oxo-Ethanodiyl)zirkon-dichlorid
(2-(Cyclopentadienyl)1-oxo-Cyclohexanodiyl)zirkondichlorid
(2-(Cyclopentadienyl)1-tio-Ethanodiyl)titan-dichlorid
(2-(Cyclopentadienyl)1-tio-Cyclohexanodiyl)titandichlorid
(2-(Cyclopentadienyl)1-tio-Ethanodiyl)zirkon-dichlorid
(2-(Cyclopentadienyl)1-tio-Cyclohexanodiyl)zirkondichlorid

2. Katalytische metallorganische Komponente, die (2-(cyclopentadienyl)1-oxo-ethandiyl)-titan-dichlorid ist.

3. Katalytisches System, das aus einer katalytischen metallorganischen Komponente nach Anspruch 1 oder 2 und einem aus der Gruppe der Alkylaluminoxane und Borverbindungen ausgewählten Co-Katalysator besteht.

4. Katalytisches System nach Anspruch 3, in welchem der Co-Katalysator aus der Gruppe gewählt wird, die aus Methylaluminoxan, Ethylaluminoxan, N,N-Dimethylaniliniumtetrakis-(pentafluorophenyl)borat und Trispentafluorphenylboran besteht.

5. Verfahren zur (Co)Polymerisation von α-Olefinen, **gekennzeichnet durch** die Verwendung eines katalytischen Systems nach Anspruch 3 oder 4.

6. Verfahren zur (Co)Polymerisation von α-Olefinen nach Anspruch 5, bei welchem die Polymerisationstemperatur von -60°C bis 300°C, der Druck von 1 bis 4000 Atmosphären und die Konzentration des Übergangsmetalls von 10⁻⁷ bis 10⁻³ M variiert, der Co-Katalysator ein Aluminoxan ist und das Molverhältnis Aluminium/Übergangsmetall von 100 bis 10000 variiert.

7. Verfahren zur (Co)Polymerisation von α-Olefinen nach Anspruch 5, bei welchem die Polymerisationstemperatur von -60°C bis 300°C, der Druck von 1 bis 4000 Atmosphären und die Konzentration des Übergangsmetalls von 10⁻⁷ bis 10⁻³ M variiert, der Co-Katalysator eine Borverbindung ist und das Molverhältnis Co-Katalysator/Übergangsmetall von 0,5 bis 10 variiert.

8. Verfahren zur (Co)Polymerisation von α-Olefinen nach Anspruch 6, **dadurch gekennzeichnet, dass** die Polymerisationstemperatur von 40°C bis 220°C variiert, der Druck von 1 bis 4000 Atmosphären variiert, die Konzentration des Übergangsmetalls von 10⁻⁶ und 10⁻⁴ M variiert und dass der Co-Katalysator ein Aluminoxan ist und das Molverhältnis Aluminium/Übergangsmetall von 500 bis 1500 variiert.

9. Verfahren zur (Co)Polymerisation von α-Olefinen nach Anspruch 7, bei welchem die Polymerisationstemperatur von 40°C bis 220°C, der Druck von 1 bis 4000 Atmosphären und die Molkonzentration des Übergangsmetalls von 10⁻⁶ bis 10⁻⁴ M variiert, der Co-Katalysator eine Borverbindung ist und das Molverhältnis Co-Katalysator/Übergangsmetall von 0,9 bis 5 variiert.

10. Verfahren zur (Co)Polymerisation von α-Olefinen nach den Ansprüchen 5-9, in welchem das Monomer Ethylen ist.

## Revendications

1. Composant catalytique organométallique sélectionné parmi le groupe formé de:
Dichlorure de (2-(cyclopentadiényl)1-oxo-éthanodiil) titane
Dichlorure de (2-(cyclopentadiényl)1-oxo-cyclohexanodiil) titane
Dichlorure de (2-(cyclopentadiényl)1-oxo-éthanodiil) zirconium
Dichlorure de (2-(cyclopentadiényl)1-oxo-cyclohexanodiil) zirconium
Dichlorure de (2-(cyclopentadiényl)1-tio-éthanodiil) titane
Dichlorure de (2-(cyclopentadiényl)1-tio-cyclohexanodiil) titane
Dichlorure de (2-(cyclopentadiényl)1-tio-éthanodiil) zirconium
Dichlorure de (2-(cyclopentadiényl)1-tio-cyclohexanodiil) zirconium.

2. Composant catalytique organométallique, constitué de dichlorure de (2-(cyclopentadiényl)1-oxo-éthanodiil) titane.

3. Système catalytique comprenant un composant catalytique organométallique selon la revendication 1 ou 2 et un cocatalyseur sélectionné parmi le groupe formé d'alkyl-aluminoxane et des composés de bore.

4. Système catalytique selon la revendication 3 où le cocatalyseur est sélectionné parmi le groupe qui comprend: du méthyl-aluminoxane, éthyl-aluminoxane, N,N-diméthyl-anilinium-tetrakis-(pentafluorophényl)borate et tris-pentafluorophényl-borane.

5. Procédé pour la (co)polymérisation des α-oléfines **caractérisé par** l'utilisation d'un système catalytique selon la revendication 3 ou 4.

6. Procédé pour la (co)polymérisation des α-oléfines selon la revendication 5 où la température de polymérisation varie entre -60°C et 300°C, la pression varie entre 1 et 4000 atmosphères, la concentration du métal de transition varie entre 10⁻⁷ et 10⁻³ M, le cocatalyseur est un aluminoxane et la proportion molaire aluminium/métal de transition varie entre 100 et 10000.

7. Procédé pour la (co)polymérisation des α-oléfines selon la revendication 5 où la température de polymérisation varie entre -60°C et 300°C, la pression varie entre 1 et 4000 atmosphères, la concentration molaire du métal de transition varie entre 10⁻⁷ et 10⁻³ M, le cocatalyseur est un composé de bore et la proportion molaire cocatalyseur/métal de transition varie entre 0,5 et 10.

8. Procédé pour la (co)polymérisation des α-oléfines selon la revendication 6 **caractérisé en ce que** la température de polymérisation varie entre 40°C et 220°C, la pression varie entre 1 et 4000 atmosphères, la concentration du métal de transition varie entre 10⁻⁶ et 10⁻⁴ M, le cocatalyseur est un aluminoxane et la proportion molaire aluminium/métal de transition varie entre 500 et 1500.

9. Procédé pour la (co)polymérisation des α-oléfines selon la revendication 7 où la température de polymérisation varie entre 40°C et 220°C, la pression varie entre 1 et 4000 atmosphères, la concentration molaire du métal de transition varie entre 10⁻⁶ et 10⁻⁴ M, le cocatalyseur est un composé de bore et la proportion molaire entre le cocatalyseur/métal de transition varie entre 0,9 et 5.

10. Procédé pour la (co)polymérisation des α-oléfines selon les revendications 5-9, où le monomère est un éthylène.
